# EUROPÄISCHE PATENTSCHRIFT

(11) **EP 2 110 634 B1**
(45) Veröffentlichungstag und Bekanntmachung des Hinweises auf die Patenterteilung: **19.10.2016**
(21) Anmeldenummer: 09004568.3
(22) Anmeldetag: 30.03.2009
(51) Int. Cl.: F28D 9/00, F28F 9/02, F01N 5/02

(54) **Abgasverdampfer eines Kraftfahrzeuges**
Exhaust gas evaporator for motor vehicle
Evaporateur de gaz d'échappement pour véhicule automobile

(30) Priorität: 16.04.2008 DE 102008019320; 06.10.2008 DE 102008050120
(43) Veröffentlichungstag der Anmeldung: 21.10.2009
(73) Patentinhaber: MAHLE Behr GmbH & Co. KG, 70469 Stuttgart (DE)
(72) Erfinder: Maucher, Ulrich, 70825 Korntal-Münchingen (DE); Kämmerer, Martin, 73728 Esslingen (DE); Diem, Johannes, 71287 Weissach (DE)
(74) Vertreter: Grauel, Andreas

(56) Entgegenhaltungen:
- DE-A1- 3 734 523
- FR-A1- 2 855 605
- GB-A- 277 556
- GB-A- 841 951
- US-A- 5 048 596
- US-B2- 6 647 971

## Beschreibung

Die Erfindung betrifft einen Abgasverdampfer eines Kraftfahrzeuges, mit einem Wärmeübertragerblock, mit einer ersten axialen Abschlusseinrichtung und mit einer zweiten axialen Abschlusseinrichtung, bei welchem der Wärmeübertragerblock sowohl axiale Eintrittsöffnungen als auch axiale Austrittsöffnungen aufweist.

Gattungsgemäße Verdampfer sind aus dem Stand der Technik zumindest dahin gehend bekannt, dass mit Ihnen Abgase von Brennkraftmaschinen von Kraftfahrzeugen gekühlt werden können. In diesem Zusammenhang ist beispielsweise in der Offenlegungsschrift DE 10 2006 043 951 A1 ein Wärmeübertrager beschrieben, der als einfache Lötkonstruktion möglichst in einem Arbeitsgang zusammen gefügt werden kann. Der Wärmeübertrager weist hierzu eine Vielzahl an flach ausgebildeten Rohren auf, durch welche die Abgase geleitet werden. Die flachen Rohre können zum Kühlen der sie durchströmenden Abgase von einem Kühlmittel umströmt werden. Um die flachen Rohre zueinander positionieren zu können, werden alle Enden der flachen Rohre in Rohrböden eingesteckt, die mit entsprechend ausgebildeten Durchzügen versehen sind. Anschließend können die Enden der Rohre mit den Rohrböden sowie weitere Komponenten des Wärmeübertragers in einem Lötvorgang vorteilhaft miteinander verlötet werden, so dass der Wärmeübertrager kostengünstiger herstellbar ist.

Neben Wärmeübertragern, mittels welchen Abgase einer Brennkraftmaschine gekühlt werden sollen, werden immer öfter Wärmeübertrager als Abgasverdampfer gefordert, welche neben einer heißen Abgasseite eine kühlende Verdampferseite umfassen, mittels welcher die Wärmeenergie aus den Abgasen nach einer geeigneten Umwandlung, beispielsweise mittels eines Rankine-Prozesses, auch als mechanische Energie genutzt werden kann. Gegenüber herkömmlichen Wärmeübertragern zum Kühlen von Abgasen treten an derartigen Abgasverdampfern auf Grund wesentlich höherer Betriebsdrücke insbesondere stärkere mechanische Belastungen auf.

Aus der Druckschrift DE 602 16 875 T2 ist ein Brennstoffverdampfer eines Brennstoffzellensystems bekannt, der einen Verdampferkern aufweist, an dessen axialen Enden konisch zulaufende Köpfe angeordnet werden. Über diese Köpfe können dem Kern einerseits heiße Gase zugeführt und anderseits nach Durchströmen des Kerns wieder abgeführt werden. Der Verdampferkern hat einen Schichtaufbau aus Trennplatten, Rippen und Abstandsleisten sowie Lötfolien zum Verlöten der einzelnen Kernkomponenten. Um den Zusammenbau der einzelnen Komponenten zu vereinfachen, werden die miteinander zu verlötenden Komponenten des Kerns mittels Befestigungslaschen zusammen gehalten. Nachdem die Komponenten des Verdampferkerns mittels eines Lötprozesses verlötet wurden, werden die Befestigungslaschen maschinell entfernt. Auf den so gefertigten Verdampferkern werden nun die Köpfe axial aufgesteckt und mit dem Verdampferkern zu dem Brennstoffverdampfer verschweißt. Dieses zweistufige Herstellungsverfahren aus einem Lötprozess und einem anschließenden Schweißprozess ist sehr aufwändig und deshalb auch kostspielig.

Ein hierzu gattungsgemäßer Brennstoffverdampfer ist aus der Patentschrift US 6,953,009 B2 bekannt, der im Wesentlichen ebenfalls einen Schichtaufbau aufweist. Dieser Brennstoffverdampfer wird in einem nahezu identischen Brennstoffzellensystem verwendet, jedoch hat der hier gezeigte Brennstoffverdampfer einen etwas veränderten Aufbau, da Zuführeinrichtungen für heiße Gase nicht axial an einem Verdampferkern angeordnet sind sondern radial. Die einzelnen Schichten werden auch hier miteinander verlötet, wobei sie mit einem Lötgestell zusammen gehalten werden müssen, um während eines Lötprozesses in ihrer vorgesehenen Position zu verbleiben.

Es ist Aufgabe vorliegender Erfindung, einen gattungsgemäßen Abgasverdampfer weiter zu entwickeln, so dass einerseits solchen höheren Belastungen dauerhaft Stand gehalten und andererseits ein Abgasverdampfer in einem einfachen Fertigungsprozess sicher und mit hoher Maßgenauigkeit hergestellt werden kann.

Die Aufgabe der Erfindung wird von einem Abgasverdampfer eines Kraftfahrzeuges, mit einem Wärmeübertragerblock, mit einer ersten axialen Abschlusseinrichtung und mit einer zweiten axialen Abschlusseinrichtung gelöst, bei welchem der Wärmeübertragerblock sowohl axiale Eintrittsöffnungen als auch axiale Austrittsöffnungen aufweist, und bei welchem an dem Wärmeübertragerblock Mittel zum Bilden eines Formschlusses mit den axialen Abschlusseinrichtungen angeordnet sind, wobei die Mittel zum Bilden des Formschlusses zumindest teilweise axial über die axialen Eintrittsöffnungen und/oder über die axialen Austrittsöffnungen des Wärmeübertragerblocks derart hervor stehen, dass sie radial neben Anlageschultern der axialen Abschlusseinrichtungen anordenbar sind.

Vorteilhafter Weise gelingt es vorliegend mittels der Mittel zum Bilden des Formschlusses, nachstehend auch kurz Formschlussmittel genannt, auf bau-lich besonders einfache Weise einen Abgasverdampfer, insbesondere den Wärmeübertragerblock des Abgasverdampfers, besonders stabil auszubilden, ohne hierbei wesentliche Gewichtsnachteile auf Grund einer massiveren Bauweise in Kauf nehmen zu müssen. Hierdurch kann der vorliegende Abgasverdampfer selbst besonders hohen Arbeitsdrücken von über 50 bar widerstehen. Selbst hohen Druckdifferenzen, beispielsweise zwischen einer Abgasseite des Wärmeübertragers mit ca. 5 bar und einer Verdampferseite des Abgasverdampfers mit beispielsweise 30 bar oder mehr, kann der vorliegende Abgasverdampfer auf Grund der vorgesehenen Formschlussmittel dauerhaft widerstehen.

Beispielsweise kann hierbei mit Hilfe eines geeigneten Kältemittels, welches auf der Verdampferseite des Abgasverdampfers mittels der Wärmeenergie der auf der Abgasseite befindlichen Abgase verdampft bzw. überhitzt wird, in einer Expansionsmaschine mechanische Energie, zum Beispiel in einer Kolbenmaschine oder einer Turbine, gewonnen werden. Die mechanische Energie könnte direkt in einen Antriebsstrang eines Kraftfahrzeuges eingeleitet oder zum Antrieb von Nebenaggregaten, wie beispielsweise zum Antrieb eines Generators zur Gewinnung elektrischer Energie, verwendet werden.

Jedenfalls weist der erfindungsgemäße Abgasverdampfer trotz eines relativ geringen Gewichts in vorteilhafter Weise eine hohe Dauerfestigkeit auf, indem der Wärmeübertragerblock mit den Abschlusseinrichtungen des Wärmeübertragers zusätzlich mittels der Formschlussmittel formschlüssig verbunden ist.

Besonders vorteilhaft ist es vorliegend jedoch, dass es mittels des erfindungsgemäßeₙ Aufbaus des Abgasverdampfers auf konstruktiv einfache Weise gelingt, einen besonders einfachen und betriebssicheren Lötprozess mit außergewöhnlich guten Lötergebnissen zu gewährleisten. Dies liegt zum einen daran, dass es auf Grund der Anlageschulter für gestapelte Komponenten des Abgasverdampfers nahezu unmöglich ist, insbesondere in Stapelrichtung der Komponenten, sich in einem kritischen Maße nach außen zu verlagern. Hierdurch können enge Lötspalten zwischen den einzelnen Komponenten gewährleistet werden, so dass sehr gute Lötverbindungen zwischen den Komponenten erzielt werden können. Darüber hinaus kann auf eine zusätzliche Positionierung der Komponenten verzichtet werden, insbesondere auf sonst übliche Schweißhefter oder Lötgestelle, um die Komponenten für den Lötprozess zu fixieren.

Der Begriff "Formschlussmittel" kann vorliegend alle Gebilde erfassen, welche genügend weit über einen Rand des Wärmeübertragerblocks hinaus ragen, um mit geeignet ausgebildeten radialen Anlageschultern und/oder Nuten der jeweiligen Abschlusseinrichtung des Abgasverdampfers auch formschlüssig kommunizieren zu können.

Der Begriff "Anlageschulter" beschreibt vorliegend jegliche Einrichtung einer axialen Abschlusseinrichtung, an welche sich eine Komponente des Wärmeübertragerblocks radial abstützen kann, so dass sich diese Komponente seitlich in einem kritischen Maß nicht aus einer voreingestellte Lage bewegen kann.

Unter dem Begriff "Abgasanlage" versteht man vorliegend jegliche Komponenten, durch welche Abgase einer Brennkraftmaschine nach dem Verlassen der Brennkraftmaschine geleitet werden. So erfasst der Begriff "Abgasanlage" auch Komponenten einer Abgasrückführung. Insbesondere in einer solchen Abgasrückführung kann der hier beschriebene Abgasverdampfer vorteilhaft integriert sein.

Der Begriff "Wärmeübertragerblock" beschreibt einen wesentlichen Bestandteil des vorliegenden Abgasverdampfers. Der Wärmeübertragerblock umfasst hierbei vorzugsweise die Komponenten des Abgasverdampfers, welche im Wesentlichen einen Wärmeübergang von einem ersten Medium, wie etwa Abgase, zu einem zweiten Medium, wie etwa ein verdampfbares Kühlmittel, ermöglichen. Hierzu weist der Wärmeübertragerblock zumindest Abgaskanäle und Kühlmittelkanäle auf, die vorzugsweise abwechselnd nebeneinander angeordnet sind. Der Wärmeübertragerblock ist in einer Sandwichbauweise hergestellt. Der Begriff "Sandwichbauweise" ist im Wesentlichen selbsterklärend, wobei insbesondere im Zusammenhang mit dem hier beschriebenen Abgasverdampfer klar ist, dass Abgasebenen mit Kühlmittelebenen alternierend im bzw. am Abgasverdampfer angeordnet sind. Oftmals wird für den Begriff "Sandwichbauweise" auch die Bezeichnung "Scheibenbauweise" verwendet.

Mit dem Begriff "axiale Abschlusseinrichtung" werden jegliche Einrichtungen verstanden, welche an axialen Enden eines Wärmeübertragerblocks angeordnet werden können, um einerseits den Wärmeübertragerblock zu stabilisieren und insbesondere gegenüber radial wirkenden Druckkräften zu festigen, und um andererseits dem Abgasverdampfer insgesamt einen stabilen und festen Abschluss zu verleihen, so dass er problemlos in eine Abgasanlage integriert werden kann.

Die axialen Eintrittsöffnungen und axialen Austrittsöffnungen beschreiben in diesem Zusammenhang Öffnungen eines Wärmeübertragerblocks, durch welche Abgase einer Brennkraftmaschine an einem ersten axialen Ende des Wärmeübertragerblocks in abgasseitige Ebenen des Wärmeübertragerblocks eintreten und an einem weiteren axialen Ende des Wärmeübertragerblocks aus den abgasseitigen Ebenen wieder austreten können.

Die vorstehend bereits erläuterten Mittel zum Bilden des Formschlusses des Wärmeübertragerblocks können baulich besonders einfach bereit gestellt werden, wenn die Mittel zum Bilden des Formschlusses von radial äußeren Komponenten des Wärmeübertragerblocks gebildet sind.

Wie eingangs bereits erläutert, wird der Wärmeübertragerblock in einer Sandwichbauweise hergestellt. Hierbei kann der Abgasverdampfer schichtweise mittels einzelner Komponenten, wie Schichtbleche, Abgaskanalebenen und seitlichen Abstandsleisten zum Beabstanden der Schichtbleche und Abgaskanalebenen, konstruktiv einfach aufgebaut werden, indem die einzelnen Komponenten in geeigneter Weise miteinander kassettiert und anschließend vorzugsweise gemeinsam mit axialen Abschlusseinrichtungen verlötet werden. Einen vorteilhaften Aufbau hierzu zeigt ein später noch erläutertes Ausführungsbeispiel.

Sehr sicher können die Mittel zum Bilden des Formschlusses radial gelagert werden, wenn die Mittel zum Bilden des Formschlusses in axial geöffnete Nuten der axialen Abschlusseinrichtungen anordenbar sind.

Werden die vorliegenden Formschlussmittel des Wärmeübertragerblocks insbesondere von radial äußeren Komponenten, wie etwa von äußeren Schichtblechen bzw. Abschlussblechen des Wärmeübertragerblocks oder von äußeren Abstandsleisten gebildet, können die Formschlussmittel vorteilhaft mittels bereits vorhandener Wärmeübertragerblockkomponenten bereit gestellt werden. Hierdurch kann der gesamte Abgasverdampfer gewichtsmäßig leicht gebaut werden und er verfügt zudem über eine besonders hohe Festigkeit. Insbesondere hinsichtlich thermischer Wechsellasten und zyklischer Drucklasten an einem Abgasverdampfer sind besonders hohe und gute Festigkeitseigenschaften besonders vorteilhaft.

Im Zusammenhang mit einer sehr kompakten Ausführungsvariante ist es vorteilhaft, wenn die radial äußeren Komponenten des Wärmeübertragerblocks eine Hülle des Wärmeübertragerblocks bilden.

So ist es weiter besonders vorteilhaft, wenn die Mittel zum Bilden des Formschlusses von Abstandsleisten und/oder von Schichtblechen des Wärmeübertragerblocks gebildet sind.

Es versteht sich, dass die Schichtbleche, die Abstandsleisten oder sonstige Komponenten eines Wärmeübertragerblocks an den axialen Enden des Wärmeübertragerblocks in unterschiedlicher Gestalt ausgeführt sein können. Sind insbesondere die Abstandsleisten des Wärmeübertragerblocks an ihren axialen Enden radial nach außen oder radial nach innen umgebogen, können Formschlussmittel des Wärmeübertragerblocks besonders einfach ausgebildet sein.

Die vorliegenden Formschlussmittel eignen sich vorliegend besonders gut, ein radiales Auswandern von Komponenten eines Wärmeübertragerblocks zu verhindern, sei es auf Grund von sehr hohen Betriebsdrücken oder auf Grund eines starken Erhitzens der Komponenten des Wärmeübertragerblocks bei einem Lötvorgang. In jedem Fall können die Komponenten des Wärmeübertragerblocks mittels der Formschlussmittel radial besonders gut unterstützt werden.

Um insbesondere ein solches radiales Auswandern von Komponenten in Stapelrichtung des Wärmeübertragerblocks zu verhindern, ist es vorteilhaft, wenn sich jeweils eine äußere Komponente des Wärmeübertragerblocks radial an einer entsprechend platzierten Anlageschulter abstützen kann.

In diesem Zusammenhang ist es vorteilhaft, wenn die axial geöffneten Nuten der axialen Abschlusseinrichtungen eine äußere Nutschulter und/oder eine innere Nutschulter aufweisen, an welchen sich die Mittel zum Bilden des Formschlusses radial abstützen können.

Bildet darüber hinaus eine radiale Anlageschulter oder eine innere Nutschulter der axial geöffneten Nuten einen axialen Anschlag für Komponenten des Wärmeübertragerblocks, insbesondere für Schichtbleche, Abstandsleisten und/oder Verbindungskanäle des Wärmeübertragerblocks, können Komponenten des Wärmeübertragerblocks auch axial baulich einfach gesichert werden.

Um zumindest einzelne Komponenten des Wärmeübertragerblocks in axialer Richtung besonders sicher fixieren zu können, weist der Wärmeübertragerblock axial wirkende Sicherungsmittel auf, welche radial über den Wärmeübertragerblock, insbesondere radial über der Hülle des Wärmeübertragerblocks, hervor stehen. Die axialen Sicherungsmittel können kumulativ oder alternativ zu den zuvor erläuterten Formschlussmitteln vorgesehen werden. Besonders vorteilhaft sind die axialen Sicherungsmittel hinsichtlich noch nicht miteinander verlöteter Komponenten des Wärmeübertragerblocks, da mittels der axial wirkenden Sicherungsmittel die Gefahr verringert werden kann, dass sich die Komponenten des Wärmeübertragerblocks insbesondere vor oder während des Lötens eines Abgasverdampfers axial zueinander verschieben.

Ähnlich wie bei den Formschlussmitteln ist es auch hinsichtlich der axial wirkenden Sicherungsmittel vorteilhaft, wenn die axial wirkenden Sicherungsmittel an den Schichtblechen und/oder an den Abstandsleisten angeordnet sind. So können auch die axial wirkenden Sicherungsmittel mittels bereits vorhandener Komponenten des Wärmeübertragerblocks baulich einfach bereit gestellt werden.

Damit die axial wirkenden Sicherungsmittel vorteilhaft mit den axialen Abschlusseinrichtungen des Abgasverdampfers wechselwirken können, ist es vorteilhaft, wenn die axialen Abschlusseinrichtungen radial geöffnete Sicherungsnuten für die axial wirkende Sicherungsmittel des Wärmeübertragerblocks aufweisen.

Sind die radial geöffneten Sicherungsnuten axial vor den axial geöffneten Nuten angeordnet, können die radial geöffneten Sicherungsnuten problemlos an den axialen Abschlusseinrichtungen angearbeitet werden.

Weisen eine axial geöffnete Nut der axialen Abschlusseinrichtungen und/oder eine radial geöffnete Sicherungsnut der axialen Abschlusseinrichtungen ein Lotmitteldepot auf, gestaltet sich ein gemeinsamer Lötvorgang des Abgasverdampfers als besonders einfach, da mittels eines solchen Lotmitteldepots vorteilhaft Lot an die Lötbereiche bereit gestellt werden kann.

Eine weitere vorteilhafte Ausführungsvariante sieht vor, dass die axialen Abschlusseinrichtungen einen Anschlussflansch für eine Abgasanlage eines Kraftfahrzeuges aufweisen. Mittels eines solchen Anschlussflansches kann ein Abgasverdampfer, besonders vorteilhaft in eine Abgasanlage eingebaut werden. Insbesondere kann eine axiale Abschlusseinrichtung auch unmittelbar einen Diffusor einer Abgasanlage umfassen.

Hinsichtlich eines konkreten Beispiels kann ein Abgasverdampfer in Rahmenbauweise ausgeführt sein. Hierbei dienen weitgehend flache Trennbleche als Trennwände zwischen Kanälen für zwei Medien, Abgase und Kältemittel, wobei die Kanäle nach Außen gegenüber der Umgebung durch Rahmen, bevorzugt weitgehend rechteckige Leisten, abgeschlossen werden. Abgaskanäle des Abgasverdampfers sind in Längsrichtung nicht verschlossen, so dass eine axiale Durchströmung des Abgasverdampfers mit Abgasen ermöglicht wird. Kältemittelkanäle sind hingegen in Längsrichtung durch jeweils eine bevorzugt weitgehend rechteckige Leiste verschlossen, so dass keine Abgase in die Kältemittelkanäle eintreten können. Die Kältemittelkanäle stehen durch rohrartige Verbindungskanäle, die durch die Abgaskanäle geführt werden, miteinander in Verbindung. Der Abgasverdampfer ist vorzugsweise beidseitig berippt, wobei sich die Rippen auf der Abgasseite und auf der Kältemittelseite stark scheiden. Auf der Abgasseite können übliche Abgaskühlerrippen verwendet werden, beispielsweise wellig ausgeführte Rippe, oder Stegrippen mit einer geraden oder schrägen Verzahnung. Es ist hierbei ein Kernpunkt, dass ein axialer Abschluss des Abgasverdampfers, also der Abgaseintritt und Abgasaustritt, als ein Flansch bzw. Diffusor in einer umlaufenden Lötverbindung mit einem Wärmeübertragerblock verlötet ist, wobei beispielsweise der Flansch den Block außen umschließen kann und die Lötverbindung außen umlaufend am Block verläuft. Oder aber der Flansch kann innen eingesteckt sein. Der Flansch bzw. Diffusor wird bevorzugt über den kassettierten Block in axialer Richtung übergesteckt und fixiert den Block während des Lötprozesses vorteilhaft. Um einen engen Lötspalt sicherstellen zu können, müssen in diesem Fall die Leisten in der Regel zusätzlich gegen ein Verrutschen nach innen fixiert werden, z.B. durch eine Vormontage mit jeweils einem Trennblech zu einer Baugruppe. Im typischen Fall tritt durch die Verpressung der Baugruppe während des Lötprozesses zur Sicherstellung enger Lötspalte während des Lötprozesses ein erheblicher Schwund in Stapelrichtung auf. Dieser Schwund wird insbesondere dann noch größer, wenn Lotpasten eingesetzt werden, bei denen sich die Lotschichtdicke durch Ausgasen des Binders während des Lötprozesses erheblich reduziert. In diesem Fall muss der Flansch eingesteckt werden und die umlaufende Verbindung verläuft auf der Innenseite der "Blockwand" aus Trennblechen und Leisten. Die Trennbleche sind dann an den Seiten axial verlängert und auch die äußeren Leisten stehen axial über die Medienkanäle über, so dass hierdurch zwei geschlossene Außenwände entstehen. Diese werden bevorzugt in eine in Stapelrichtung verlaufende Nut im Diffusor oder Flansch des Abgasverdampfers eingesteckt. Hierdurch kann eine genaue Positionierung der Leisten und Trennbleche quer zur Stapelrichtung erreicht werden und es entsteht quer zur Stapelrichtung jeweils ein enger gut verlötbarer Spalt zwischen den beiden Seitenflanken der Nute und den Leisten und Trennblechen. Das unterste Trennblech in Stapelrichtung (Trennung des untersten Kanales nach Außen) ist in Stapelrichtung auf eine Schulter des Flansches bzw. Diffusors aufgelegt. Der Flansch bzw. Diffusor hat eine weitere obere Schulter, auf die das oberste Trennblech in Stapelrichtung (Trennung des obersten Kanals nach Außen) aufgelegt wird. Beim Kassettieren des Abgasverdampfers kann zwischen oberstem Trennblech und etwa dem Flansch zunächst ein Spalt vorliegen, der sich während des Lötprozesses durch den Schwund schließt. Es entsteht ein geschlossener, umlaufender lateraler Lötspalt, der eine dichte und mechanisch haltbare Lötverbindung von Block und Flansch bzw. Diffusor ermöglicht. In einer Variante hierzu können Trennbleche seitliche Überstände (Widerhaken) nach außen und/oder seitliche Überstände nach innen haben, die in eine entsprechende laterale Nut etwa des Flansches, die in Stapelrichtung verläuft, eingreifen und eine axiale Fixierung der Trennbleche und des Flansches bzw. Diffusors ermöglichen. Die Trennbleche und Rahmen werden in Stapelrichtung in den Flansch eingeschoben und es ergibt sich ein Formschluss. So wird insbesondere während des Lötprozesses verhindert, dass etwa der Flansch axial abkippen kann, und es kann auf eine weitere Fixierung des Flansches beispielsweise durch ein Lötgestell verzichtet werden. Auch Leisten und Trennbleche sind positioniert sowie axial und seitlich fixiert, und es muss keine Vormontage zu Trennblech/Rahmen-Baugruppen, beispielsweise mittels Schweißhefter, erfolgen. Bezüglich der Herstellbarkeit ist es vorteilhaft, wenn die Widerhaken in dem Bereich des Flansches bzw. des Diffusors zu liegen kommen, in welchem ein Trennblechüberstand nicht mehr beidseitig von der Nut eingeschlossen ist. Alternativ oder ergänzend hierzu können auch an Seitenleisten der Kanäle Widerhaken ausgeformt sein. Weiterhin können die Seitenleisten an den Enden nach innen oder nach außen gebogen werden und so in eine entsprechende Nut im Flansch eingreifen, um den Flansch axial während des Lötprozesses zu fixieren. In allen geschilderten Fällen kann der Flansch bzw. der Diffusor in der Regel nicht axial aufgeschoben werden, sondern die Komponenten werden während eines Kassettierprozesses in Stapelrichtung radial in den Flansch eingeführt. Die Nut kann tiefer als die Einstecktiefe der Trennbleche und Leisten ausgeführt sein, wodurch sie zugleich als Lotdepot genutzt werden kann. Hierdurch ergibt sich ein besonders einfacher Belotungsprozess. Um zu verhindern, dass das Lot beim Kassettieren heraus gekratzt wird, kann die Nut, insbesondere in axialer Richtung des Abgasverdampfers, gestuft ausgeführt sein, so dass sich ein Anschlag für die eingesteckten Komponenten und hierdurch ein geschütztes Lotdepot ergibt. Weiter kann der Flansch bzw. der Diffusor bis an den Beginn der Kanäle heran reichen und einen axialen Anschlag etwa für eine Gasrippe und eine Endleiste, die einen Kältemittelkanal axial verschließt, bilden. Zum Kanalinneren hin kann für diese Endleiste das Rippenblech als Anschlag dienen, so dass ebenfalls keine Vorfixierung (beispielsweise durch Schweißhefter) für diese Endleiste erforderlich ist. Der Flansch bzw. der Diffusor kann weiterhin auch ein Rohrsegment bzw. Verbindungskanal axial fixieren, das als Durchtritt für das Kältemittel dient. Eine Fixierung in anderen Richtungen kann vorteilhaft durch eine passende Aussparung in der Gasrippe und/oder durch die Längsleiste (Abdichtung nach Außen) des Wärmetauschers erfolgen. Die Medien werden bevorzugt im Gegenstrom geführt. Insbesondere wird das Kältemittel bevorzugt mit einer hohen Zahl von Umlenkungen (10 bis 300) mäandernd durch den Kältemittelkanal geführt. Nach dem Einbau im Fahrzeug liegt die Stapelrichtung dann bevorzugt in etwa horizontal. Bei einer Gegenstromarchitektur ist die Längsachse des Abgasverdampfers bezüglich der Kältemittelführung bevorzugt horizontal oder ansteigend angeordnet. Bei einer stark ansteigenden Längsachse des Abgasverdampfers bezüglich der Kältemittelführung (> ca. 15 bis 45° gegenüber der Horizontalen bei schlanker, langgestreckter Ausführung bzw. > ca. 45 bis 70° bei gedrungener Ausführung), hat die Orientierung der Stapelrichtung des Abgasverdampfers im eingebauten Zustand in der Regel nur eine untergeordnete Bedeutung und kann weitgehend frei gewählt werden. Die vorstehend erläuterte Bauform eignet sich besonders für Abgasverdampfer, kann aber auch für andere hochbeanspruchte Wärmeübertrageranwendungen geeignet sein, insbesondere für Gas-Flüssigkeitswärmetauscher, wie Abgaskühler, Ladeluftkühler u.a.

Weitere Vorteile, Ziele und Eigenschaften vorliegender Erfindung werden anhand nachfolgender Beschreibung anliegender Zeichnung erläutert, in welcher ein Abgasverdampfer mit seinen Komponenten und mit alternativ ausgebildeten Formschlussmitteln dargestellt ist. Komponenten, welche in den Figuren wenigstens im Wesentlichen hinsichtlich ihrer Funktion übereinstimmen, können hierbei mit gleichen Bezugsziffern gekennzeichnet sein, wobei diese Komponenten nicht in allen Figuren beziffert und erläutert sein müssen.

Es zeigt
- Figur 1: schematisch eine Ansicht einer Abgasanlage einer Brennkraftmaschine eines Nutzkraftfahrzeuges, in welcher ein Abgasverdampfer oder mehrere Abgasverdampfer integriert werden können,
- Figur 2: schematisch eine Explosionsansicht von Komponenten eines Wärmeübertragerblocks eines Abgasverdampfers,
- Figur 3A: schematisch eine perspektivische Ansicht eines kassettierten Wärmeübertragerblocks,

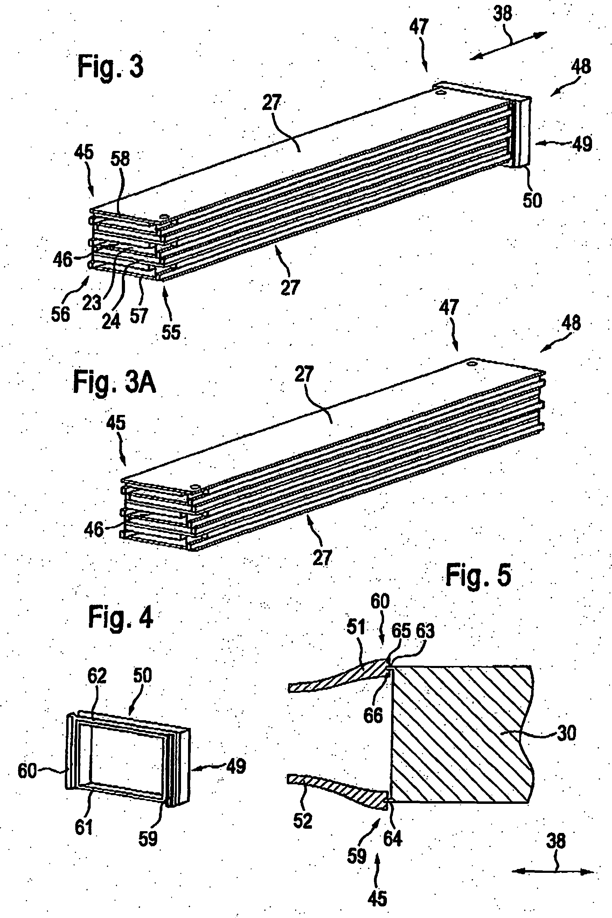

- Figur 3: schematisch eine perspektivische Ansicht des kassettierten Wärmeübertragerblocks aus der Figur 3A mit einem aufgesteckten Flansch,
- Figur 4: schematisch eine perspektivische Ansicht des Flansches aus der Figur 3,
- Figur 5: schematisch einen Längsschnitt eines Abgasverdampfers in Höhe eines Schichtbleches des Wärmeübertragerblocks mit Formschlussmitteln und einem aufgesteckten Diffusor,

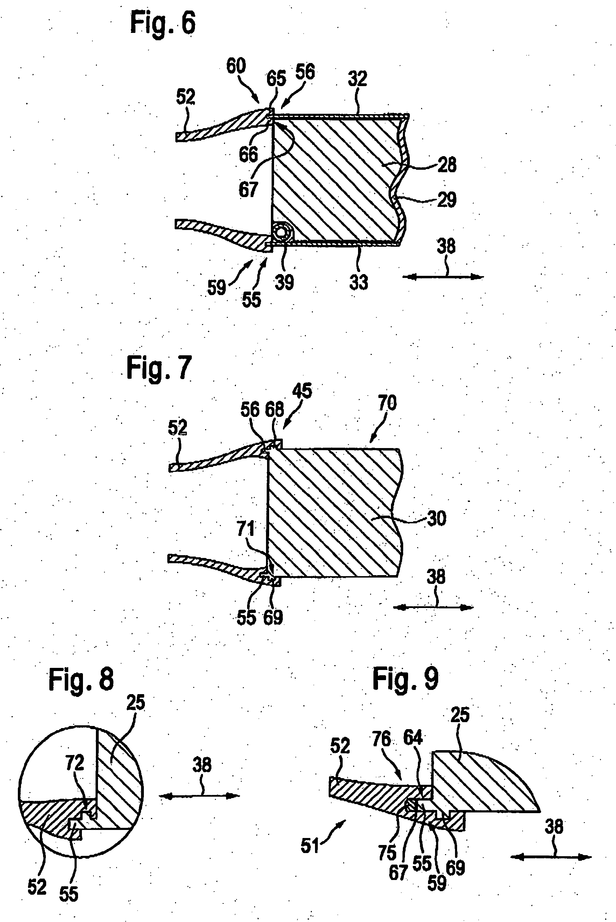

- Figur 6: schematisch einen weiteren Längsschnitt des Abgasverdampfers aus der Figur 5 in Höhe einer Abgasebene des Wärmeübertragerblocks mit einem aufgesteckten Diffusor,
- Figur 7: schematisch eine Ansicht einer Verbindung zwischen einem in einen Diffusor eingelegten Schichtblech eines Wärmeübertragerblocks eines erfindungsgemäß Abgasverdampfers, mit Formschlussmitteln und mit axial wirkenden Sicherungsmitteln,
- Figur 8: schematisch eine Ansicht alternativ gestalteter axial wirkender Sicherungsmittel, eines nicht erfindungsgemäßen Abgasverdampfers,
- Figur 9: schematisch eine axial geöffnete Nut mit einem Lotmitteldepot an einer axialen Abschlusseinrichtung eines erfindungsgemäßen Abgasverdampfers,

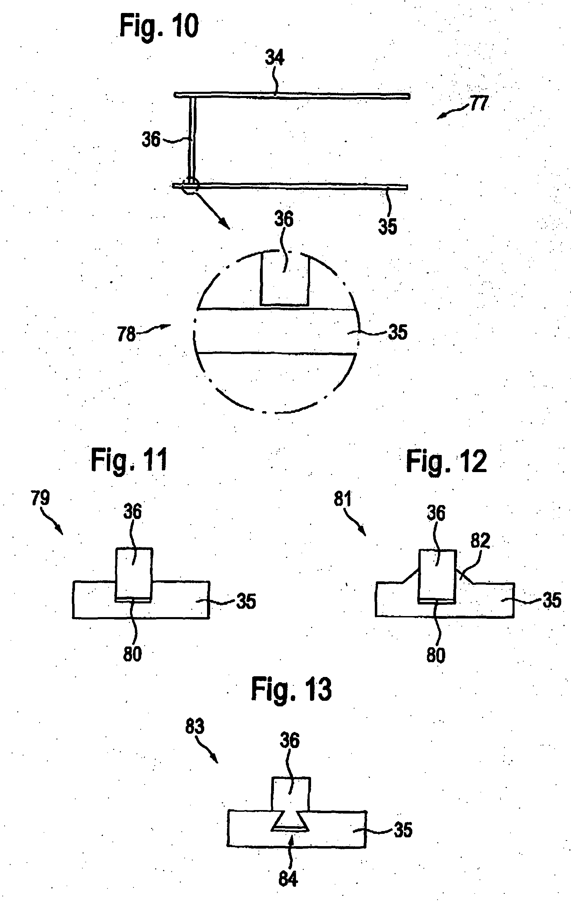

- Figur 10: schematisch eine Teilansicht eines Rahmens aus Abstandsleisten eines Wärmeübertragerblocks,
- Figur 11: schematisch eine weitere Verbindung einer axialen Abstandsleiste und einer radialen Abstandsleiste eines Rahmens eines Wärmeübertragerblocks,
- Figur 12: schematisch eine alternative Verbindung einer axialen Abstandsleiste und einer radialen Abstandsleiste eines Rahmens eines Wärmeübertragerblocks, und
- Figur 13: schematisch eine weitere alternative Verbindung einer axialen Abstandsleiste und einer radialen Abstandsleiste eines Rahmens eines Wärmeübertragerblocks.

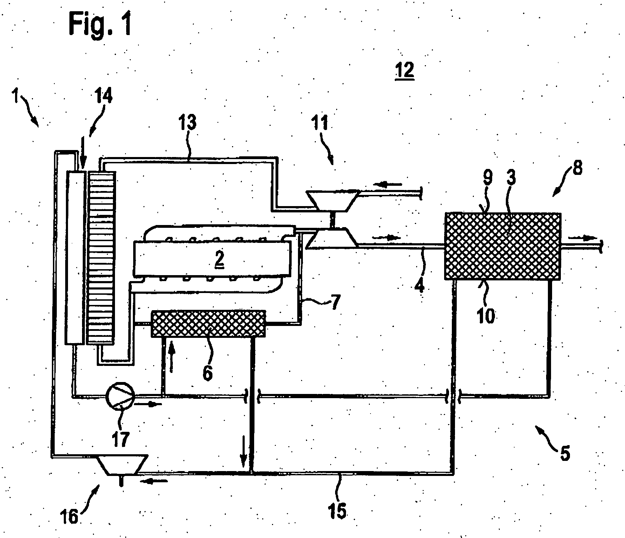

Bei der in der Figur 1 beispielhaft gezeigten Verschaltung 1 einer Brennkraftmaschine 2 eines hier nicht gezeigten Nutzkraftfahrzeuges kann/ können ein Abgasverdampfer 3 entweder in einer Hauptabgasleitung 4 einer Abgasanlage 5 und/oder ein Abgasverdampfer 6 in einer Abgasrückführleitung 7 der Abgasanlage 5 integriert sein. Bei beiden Abgasverdampfern 3 und 6 handelt es sich um einen Wärmeübertrager 8 (hier nur exemplarisch hinsichtlich des Abgasverdampfers 3 beziffert), der eine heiße Abgasseite 9 und eine kühlere Verdampferseite 10 aufweist.

Vor dem Abgasverdampfer 3 ist eine Turbine 11 in der Hauptabgasleitung 4 angeordnet, welche von den Abgasen (hier nicht eingezeichnet) angetrieben wird. Mittels der Turbine 11 wird der Brennkraftmaschine 2 zusätzlich Umgebungsluft 12 über eine Zuluftleitung 13 zugeführt. In der Zuluftleitung 13 ist ein Kondensator 14 angeordnet, auf dessen Funktion später noch eingegangen wird. Kurz vor der Brennkraftmaschine 2 mündet in die Zuluftleitung 13 noch die Abgasrückführleitung 7.

Mittels der Abgase der Brennkraftmaschine 2 kann an einer der beiden Abgasverdampfer 3, 6 oder an beiden Abgasverdampfern 3 und 6 ein Kühlmittel, welches innerhalb einer Kühlmittelleitung 15 strömen kann, an der jeweiligen Verdampferseite 10 erhitzt bzw. verdampft werden, so dass das Kühlmittel (hier nicht eingezeichnet) an einer in der Kühlmittelleitung 15 vorgesehenen Expansionsmaschine 16 mechanische Arbeit leisten kann. Insofern kann Wärmeenergie aus den Abgasen der Brennkraftmaschine 2 insbesondere an der Expansionsmaschine 16 in kinetische Energie umgewandelt werden. Beispielsweise kann die kinetische Energie mittels geeigneter Generatoren (hier nicht eingezeichnet) in elektrische Energie umgewandelt werden, die dann an dem Nutzkraftfahrzeug genutzt werden kann.

Mittels des Kondensators 14 kann das Kühlmittel nach dem Passieren der Expansionsmaschine 16, welche in diesem konkreten Ausführungsbeispiel eine Turbine ist, vorteilhaft abgekühlt werden, bevor es anschließend mittels eines Verdichters 17 komprimiert den Abgasverdampfern 3 und/oder 6 zugeführt wird.

Es versteht sich, dass an den Abgasverdampfern 3, 6 große Druckunterschiede zwischen der jeweiligen Abgasseite 9 und der diesbezüglichen Verdampferseite 10 entstehen können. Insbesondere auf der Verdampferseite 10 können problemlos mehr als 50 bar Druck entstehen. Diese extremen Druckverhältnisse können sich dauerhaft nachteilig auf die Abgasverdampfer 3 und 6 auswirken und insbesondere deren Dauerfestigkeit negativ beeinträchtigen. Deshalb müssen die Abgasverdichter 3, 6 besonders robust gebaut werden, wobei sie jedoch nicht zu schwer bauen dürfen, da sie in Kraftfahrzeugen eingesetzt werden.

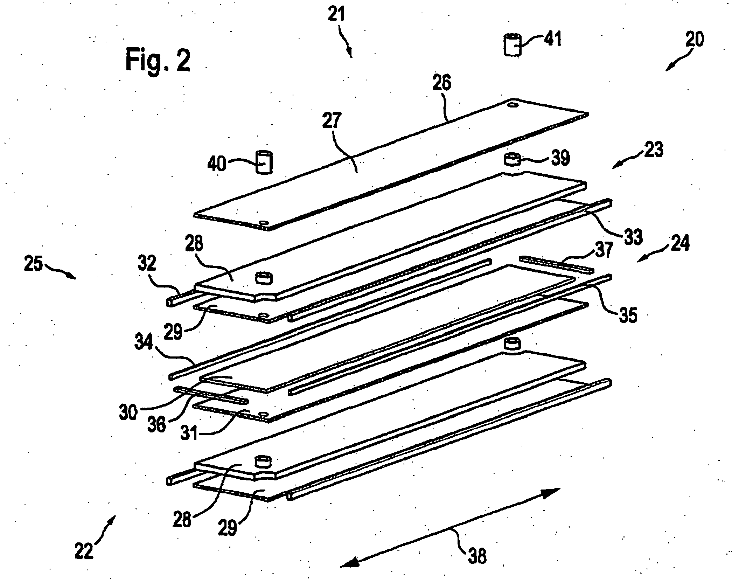

Die Abgasseite 9 und die Verdampferseite 10 werden im Wesentlichen mittels eines Wärmeübertragerblocks 20 realisiert, wie er gemäß einer Explosionsansicht 21 teilweise in der Figur 2 gezeigt ist. Es ist leicht ersichtlich, dass sich der Wärmeübertragerblock 20 schichtweise in einer Sandwichbauweise 22 zusammen setzt, wobei sich Abgasebenen 23 und Kühlmittelebenen 24 miteinander abwechseln (siehe insbesondere auch Figuren 3A und 3). Hierbei bilden die Abgasebenen 23 die Abgasseite 9 und die Kühlmittelebenen 24 die Verdampferseite 10 der Abgasverdampfer 3 bzw. 6.

Gemäß der Explosionsansicht 21 (Figur 2) sind folgende Komponenten 25 zu erkennen. Als oberste und damit eine äußere Komponente 26 des Wärmeübertragerblocks 20 ist ein äußeres Schichtblech 27 vorgesehen, gefolgt von einem Abgaskanal 28 und einem Abgasschichtblech 29, die gemeinsam eine Abgasebene 23 bilden. Insbesondere der Abgaskanal 28 weist eine Rippenstruktur auf, um einen Wärmeübergang zu erhöhen. Darunter folgt eine Kühlmittelrippe 30, und ein hiervon beabstandetes Kühlmittelschichtblech 31, welche gemeinsam einen mäandrierenden Kühlmittelkanal einer Kühlmittelebene 24 bilden. Die Kühlmittelrippe 30 dient einer Erhöhung einer Druckstabilität innerhalb des mäandrierenden Kühlmittelkanals. Daran anschließend sind wieder ein Abgaskanal 28 und ein Abgasschichtblech 29, welches gleichzeitig ein unteres äußeres Schichtblech 27 des Wärmeübertragerblocks 20 ist, vorgesehen, welche eine weitere Abgasebene 23 des Wärmeübertragerblocks 20 bilden.

Der Abgaskanal 28 und das Abgasschichtblech 29 sind mittels zwei axialer Abstandsleisten 32 und 33 voneinander beabstandet angeordnet.

Das Abgasschichtblech 29 und das Kühlmittelschichtblech 31 sind ebenfalls mittels axialer Abstandsleisten 34 und 35 sowie zusätzlich noch mittels radialer Abstandsleisten 36 und 37 voneinander beabstandet angeordnet.

Die axialen Abstandsleisten 32 bis 35 zeichnen sich dadurch aus, dass sie sich axial in Längserstreckung 38 des Wärmeübertragerblocks 20 erstrecken, wohingegen sich die radialen Abstandsleisten 36 und 37 quer zur Längserstreckung 38 erstrecken.

Weitere Abgasebenen 23 und weitere Kühlmittelebenen 24 des Wärmeübertragerblocks 20 können in gleicher Weise aufgebaut sein.

Die Kühlmittelebenen 24 sind untereinander mit Verbindungskanälen 39 (hier nur exemplarisch beziffert) verbunden, wobei an dem Wärmeübertragerblock 20 ein Kühlmitteleinlass 40 und ein Kühlmittelauslass 41 vorgesehen sind.

Die Komponenten 25 des Wärmeübertragerblocks 20 sind gemäß der Darstellung nach den Figuren 3A und 3 zumindest teilweise kassettiert, wobei ein erstes axiales Ende 45 des Wärmeübertragerblocks 20 axiale Eintrittsöffnungen 46 für Abgase aufweist. An einem zweiten axialen Ende 47 des Wärmeübertragerblocks 20 sind axiale Austrittsöffnungen 48 vorgesehen.

An dem zweiten axialen Ende 47 ist gemäß der Figur 3 bereits eine axiale Abschlusseinrichtung 49 in Gestalt eines Flansches 50 (siehe insbesondere auch Figur 4) auf den Wärmeübertragerblock 20 gesteckt.

An dem ersten axialen Ende 45 des Wärmeübertragerblocks 20 kann als alternative axiale Abschlusseinrichtung 51 des Wärmeübertragerblocks 20 ein Diffusor 52 (siehe Figur 5) angebracht werden.

Um einen außergewöhnlich guten Formschluss zwischen dem Wärmeübertragerblock 20 und den axialen Abschlusseinrichtungen 49 und 51 realisieren zu können, weist der Wärmeübertragerblock 20 Formschlussmittel 55, 56, 57 und 58 auf, die axial in axial geöffnete Nuten 59, 60, 61 und 62 der Abschlusseinrichtungen 49 und 51 eingesteckt werden können.

Die eher horizontalen Formschlussmittel 57 und 58 des Wärmeübertragerblocks 20 werden in diesem Ausführungsbeispiel mittels der zwei äußeren oberen und unteren Schichtbleche 27 des Wärmeübertragerblocks 20 gebildet, indem die beiden äußeren oberen und unteren Schichtbleche 27 über die axialen Eintrittsöffnungen 46 bzw. über die axialen Austrittsöffnungen 48 axial hervor stehen.

Die eher vertikalen Formschlussmittel 55 und 56 des Wärmeübertragerblocks 20 werden baulich ebenfalls besonders einfach gebildet, indem die axialen Abstandsleisten 32 bis 35 über die axialen Eintrittsöffnungen 46 bzw. über die axialen Austrittsöffnungen 48 axial hervor stehen. Zudem können an den übrigen Schichtblechen 30 und 31 noch axiale Nasen 63 und 64 vorgesehen werden, die gemeinsam mit den Abstandsleisten 32 bis 35 die vertikalen Formschlussmittel 55 und 56 bilden können.

Vorteilhafter Weise kann an den Formschlussmitteln 55 bis 58 und an den axial geöffneten Nuten 59 bis 62 des Flansches 50 (siehe besonders Figur 4) besonders betriebssicher eine Verlötung des Wärmeübertragerblocks 20 und der axialen Abschlusseinrichtungen 49 und 51 vorgenommen werden, da die Formschlussmittel 55 bis 58 in den axial geöffneten Nuten 59 bis 62 besonders gut fixiert sind. Zudem kann hierdurch vorteilhafter Weise ein geschlossener, umlaufender lateraler Lötspalt bereit gestellt werden. Hierdurch ist die Herstellung der Abgasverdampfer 3, 6 außergewöhnlich sicher, so dass die Gefahr von fehlerhaften Lötbereichen insbesondere auf Grund kritischer Relativbewegungen der Komponenten 25 nahezu ausgeschlossen ist. Dies zeichnet die vorliegenden Abgasverdampfer 3 und 6 neben der besonders hohen Dauerdruckfestigkeit gegenüber herkömmlichen Wärmeübertragern besonders aus. Insbesondere können die gestapelten Komponenten des Wärmeübertragerblocks in Stapelrichtung nicht kritisch radial nach außen wandern, da die beiden äußeren oberen und unteren Schichtbleche 27 in die sich oben und unten am Flansch 50 gegenüberliegenden Nuten 61 und 62 hinein ragen.

Die in der Figur 5 gezeigte Kühlmittelrippe 30 weist an dem ersten axialen Ende 45 des Wärmeübertragerblocks 20 die beiden axialen Nasen 63 und 64 auf, die einen Bestandteil der Formschlussmittel 55 bzw. 56 bilden. Diese Nasen 63, 64 sind axial in die axial geöffneten Nuten 59 bzw. 60 des Diffusors 52 eingesteckt, so dass jede der Nasen 63, 64 radial an einer äußeren Nutschulter 65 (nur hinsichtlich der axial geöffneten Nut 60 beziffert) und an einer inneren Nutschulter 66 anliegen kann, wodurch eine besonders sichere radiale Abstützung der Kühlmittelrippe 30 an dem Diffusor 52 erzielt wird.

In die axial geöffneten Nuten 59 bzw. 60 des Diffusors 52 sind auf einer anderen Ebene (siehe Figur 6) des Wärmeübertragerblocks 20 axiale Abstandsleisten 32 und 33 als Formschlussmittel 55 und 56 der Abgasebene 23 axial eingesteckt, wodurch die axialen Abstandsleisten 32 und 33 ebenfalls von der äußeren Nutschulter 65 und der inneren Nutschulter 66 radial abgestützt werden können.

Darüber hinaus kann die innere Nutschulter 66 zusätzlich als ein axialer Anschlag 67 (nur hinsichtlich der axial geöffneten Nut 60 beziffert) eingesetzt werden, mittels welcher Komponenten 25 des Wärmeübertragerblocks 20 axial zusätzlich gesichert werden können. Hierdurch kann besonders betriebssicher auf ein Lötgestell oder ähnliches verzichtet werden. Nach der Darstellung der Figur 6 können mittels der inneren Nutschultern 66 der Abgaskanal 28, das Abgasschichtblech 29 und sogar einer der Verbindungskanäle 39 axial gesichert werden.

Die in der Figur 7 gezeigte alternative Kühlmittelrippe 30 weist an einem ersten axialen Ende 45 sowohl Formschlussmittel 55, 56 als auch zusätzlich axial wirkende Sicherungsmittel 68 und 69 auf. Die axial wirkenden Sicherungsmittel 68, 69 stehen wie Widerhaken radial über eine Hülle 70 eines Wärmeübertragerblocks 20 hervor und können so in radial geöffnete Nuten 71 (der Übersichtigkeit halber nur hinsichtlich der axial wirkenden Sicherungsmittel 69 beziffert) eines Diffusors 52 eingreifen, wodurch die Kühlmittelrippe 30 besonders gut gegen ein axiales Verrutschen gesichert ist. Die einzelnen Komponenten 25 werden hierbei radial in den Diffusor 52 eingelegt, vorzugsweise in Stapelrichtung quer zur Längserstreckung 38.

Die axial wirkenden Sicherungsmittel 68 und 69 sind radial nach außen gerichtet. Nicht erfindungsgemäß können auch radial nach innen gerichtete Sicherungsmittel 72 (Figur 8) an Komponenten 25 eines Wärmeübertragerblocks 20 vorgesehen werden.

Es versteht sich, dass auch die vorstehend erläuterten Abstandsleisten 32 bis 35 axial wirkenden Sicherungsmittel 68 und 69 aufweisen können, indem Enden der Abstandsleisten 32 bis 35 umgebogen sein können.

Besonders vorteilhaft ist es, wenn an einer Nut 59, 60, 61, 62 oder 71 einer axialen Abschlusseinrichtung 49, 51, wie etwa eines Diffusors 52, zusätzlich ein Lotmitteldepot 75 vorgesehen ist, wie beispielsweise hinsichtlich der Darstellung nach der Figur 9 gezeigt. Mittels des Lotmitteldepots 75 kann ein Lötbereich 76 vorteilhaft mit Lotmittel versorgt werden, wodurch die Gefahr eines fehlerhaften Lötbereichs weiter verringert werden kann. Das Lotmitteldepot 75 ist als eine zusätzliche Vertiefung der axial geöffneten Nut 59 ausgebildet, wodurch sich an der axial geöffneten Nut 59 sogleich ein axialer Anschlag 67 realisieren lässt. Vorteilhafter Weise ist ein Lotmittel innerhalb des Lotmitteldepots 75 auch vor einem unbeabsichtigten Herauskratzen durch andere Komponenten sicher.

In den Figuren 10 bis 13 sind unterschiedliche Verlötungsmöglichkeiten von axialen Abstandsleisten 34, 35 mit einer radialen Abstandsleiste 36 abgebildet, mittels welcher ein ausreichend stabiler Leistenrahmen 77 gefertigt werden kann.

Bei der ersten Möglichkeit 78 stößt die radiale Abstandsleiste stumpf an die axiale Abstandsleiste 35 an und wird verlötet. Insofern kann hierbei keine formschlüssige Verbindung hergestellt werden, so dass die Gefahr einer unzureichenden Lötverbindung besteht.

Bei der zweiten Möglichkeit 79 nach der Figur 11 weist die axiale Abstandsleiste 35 eine Senke 80 auf, in welche die radiale Abstandsleiste 36 eingesteckt und anschließend verlötet werden kann. Hierdurch ist eine formschlüssige Verbindung realisierbar.

Bei der weiteren Möglichkeit 81 nach der Figur 12 ist um eine Senke 80 eine zusätzliche Erhöhung 82 vorgesehen, wodurch sich eine Einstecktiefe, mit welcher die radiale Abstandsleiste 36 in die axiale Abstandsleiste 35 eingesteckt werden kann, erhöht. Insofern kann diese Verbindung höhere Kräfte aufnehmen.

Bei einer alternativen Möglichkeit 83 ist zwischen der radialen Abstandsleiste 36 und der axialen Abstandsleiste 35 eine Schwalbenschwanz-Verbindung 84 vorgesehen, wodurch die Verbindung besonders hochwertig ist. Zudem ist das Handling der miteinander zu verbindenden Abstandsleisten 35, 36 vor einem Kassettieren bereits wesentlich verbessert. Insbesondere kann hierbei auf Schweißheftstellen verzichtet werden.

### Bezugsziffernliste

- 1: Verschaltung
- 2: Brennkraftmaschine
- 3: erster Abgasverdampfer
- 4: Hauptabgasleitung
- 5: Abgasanlage
- 6: zweiter Abgasverdampfer
- 7: Abgasrückführleitung
- 8: Wärmeübertrager
- 9: heiße Abgasseite
- 10: kühlere Verdampferseite
- 11: Turbine
- 12: Umgebungsluft
- 13: Zuluftleitung
- 14: Kondensator
- 15: Kühlmittelleitung
- 16: Expansionsmaschine
- 17: Verdichter
- 20: Wärmeübertragerblock
- 21: Explosionsansicht
- 22: Sandwichbauweise
- 23: Abgasebene
- 24: Kühlmittelebene
- 25: Komponenten
- 26: äußere Komponente
- 27: äußeres Schichtblech
- 28: Abgaskanal
- 29: Abgasschichtblech
- 30: Kühlmittelrippe/Rippe für Arbeitsmedium
- 31: Kühlmittelschichtblech
- 32: axiale Abstandsleiste
- 33: axiale Abstandsleiste
- 34: axiale Abstandsleiste
- 35: axiale Abstandsleiste
- 36: radiale Abstandsleiste
- 37: radiale Abstandsleiste
- 38: Längserstreckung
- 39: Verbindungskanäle
- 40: Kühlmitteleinlass
- 41: Kühlmittelauslass
- 45: erstes axiales Ende
- 46: axiale Eintrittsöffnungen
- 47: zweites axiales Ende
- 48: axiale Austrittsöffnungen
- 49: axiale Abschlusseinrichtung
- 50: Flansch
- 51: alternative axiale Abschlusseinrichtung
- 52: Diffusor
- 55: Formschlussmittel
- 56: Formschlussmittel
- 57: Formschlussmittel
- 58: Formschlussmittel
- 59: axial geöffnete Nut
- 60: axial geöffnete Nut
- 61: axial geöffnete Nut
- 62: axial geöffnete Nut
- 63: axiale Nase
- 64: axiale Nase
- 65: äußere Nutschulter
- 66: innere Nutschulter
- 67: axialer Anschlag
- 68: axial wirkende Sicherungsmittel
- 69: axial wirkende Sicherungsmittel
- 70: Hülle
- 71: radial geöffnete Nuten
- 72: radial nach innen gerichtete Sicherungsmittel
- 75: Lotmitteldepot
- 76: Lötbereich
- 77: Leistenrahmen
- 78: erste Möglichkeit
- 79: zweite Möglichkeit
- 80: Senke
- 81: weitere Möglichkeit
- 82: zusätzliche Erhöhung
- 83: alternative Möglichkeit
- 84: Schwalbenschwanz-Verbindung

## Patentansprüche

1. Abgasverdampfer (3, 6) eines Kraftfahrzeuges zum Verdampfen eines Kühlmittels mittels Abgases, mit einem Wärmeübertragerblock (20), wobei der Wärmeübertragerblock schichtweise in einer Sandwichbauweise mit Abgasschichtblechen und Kühlmittelschichtblechen gebildet ist, mit einer ersten axialen Abschlusseinrichtung (49) und mit einer zweiten axialen Abschlusseinrichtung (51), bei welchem der Wärmeübertragerblock (20) sowohl axiale Eintrittsöffnungen (46) als auch axiale Austrittsöffnungen (48) aufweist, **dadurch gekennzeichnet, dass** an dem Wärmeübertragerblock (20) Mittel (55, 56, 57, 58) zum Bilden eines Formschlusses mit den axialen Abschlusseinrichtungen (49, 51) angeordnet sind, wobei die Mittel (55, 56, 57, 58) zum Bilden des Formschlusses zumindest teilweise axial über die axialen Eintrittsöffnungen (46) und/oder über die axialen Austrittsöffnungen (48) des Wärmeübertragerblocks (20) derart hervor stehen, dass sie radial neben Anlageschultem der axialen Abschlusseinrichtungen (49, 51) anordenbar sind und der Wärmeübertragerblock (20) axial wirkende Sicherungsmittel (68, 69) aufweist, welche radial über den Wärmeübertragerblock (20), insbesondere radial über der Hülle (70) des Wärmeübertragerblocks (20), hervor stehen.

2. Abgasverdampfer (8) nach Anspruch 1, **dadurch gekennzeichnet, dass** die Mittel (55, 56, 57, 58) zum Bilden des Formschlusses in axial geöffnete Nuten (59, 60, 61, 62) der axialen Abschlusseinrichtungen (49, 51) anordenbar sind.

3. Abgasverdampfer (8) nach Anspruch 1 oder 2, **dadurch gekennzeichnet, dass** die Mittel (55, 56, 57, 58) zum. Bilden des Formschlusses von radial äußeren Komponenten (26) des Wärmeübertragerblocks (20) gebildet sind.

4. Abgasverdampfer (8) nach Anspruch 3, **dadurch gekennzeichnet, dass** die radial äußeren Komponenten (26) des Wärmeübertragerblocks (20) eine Hülle des Wärmeübertragerblocks (20) bilden.

5. Abgasverdampfer (8) nach einem der vorhergehenden Ansprüche, **dadurch gekennzeichnet, dass** die Mittel (55, 56, 67, 58) zum Bilden des Formschlusses von Abstandsleisten (32, 33, 34, 35) und/oder von Schichtblechen (27, 31) des Wärmeübertragerblocks (20) gebildet sind.

6. Abgasverdampfer (8) nach Anspruch 2 **dadurch gekennzeichnet, dass** die axial geöffneten Nuten (59, 60, 61, 62) der axialen Abschlusseinrichtungen (49, 51) eine äußere Nutschulter (65) und/oder eine innere Nutschulter (66) aufweisen, an welchen sich die Mittel (55, 56, 57, 58) zum Bilden des Formschlusses radial abstützen können.

7. Abgasverdampfer (8) nach einem der vorhergehenden Ansprüche, **dadurch gekennzeichnet, dass** eine radiale Anlageschulter oder eine innere Nutschulter (66) der axial geöffneten Nuten (59, 60, 61, 62) einen axialen Anschlag (67) für Komponenten (25) des Wärmeübertragerblocks (20), insbesondere für Schichtbleche (27, 31), Abstandsleisten (32, 33, 34, 35) und/oder Verbindungskanäle (39) des Wärmeübertragerblocks (20), bildet.

8. Abgasverdampfer (8) nach einem der Ansprüche 1 bis 7, **dadurch gekennzeichnet, dass** die axial wirkenden Sicherungsmittel (68, 69) an den Schichtblechen (27, 31) und/oder an den Abstandsleisten (32, 33, 34, 35) angeordnet sind.

9. Abgasverdampfer (8) nach einem der vorhergehenden Ansprüche, **dadurch gekennzeichnet, dass** die axialen Abschlusseinrichtungen (49, 51) radial geöffnete Sicherungsnuten (71) für axial wirkende Sicherungsmittel (68, 69) des Wärmeübertragerblocks (20) aufweisen.

10. Abgasverdampfer (8) nach Anspruch 9, **dadurch gekennzeichnet, dass** die radial geöffneten Sicherungsnuten (71) axial vor den axial geöffneten Nuten (59, 60, 61, 62) angeordnet sind.

11. Abgasverdampfer (8) nach einem der vorhergehenden Ansprüche, **dadurch gekennzeichnet, dass** eine axial geöffnete Nut (59, 60, 61, 62) der axialen Abschlusseinrichtungen (49, 51) und/oder eine radial geöffnete Sicherungsnut (71) der axialen Abschlusseinrichtungen (49, 51) ein Lotmitteldepot (75) aufweisen.

12. Abgasverdampfer (8) nach einem der vorhergehenden Ansprüche, **dadurch gekennzeichnet, dass** die axialen Abschlusseinrichtungen (49, 51 einen Anschlussflansch (50) für eine Abgasanlage (5) eines Kraftfahrzeuges aufweisen.

13. Abgasverdampfer (8) nach einem der vorhergehenden Ansprüche, **dadurch gekennzeichnet, dass** der Wärmeübertragerblock (20) eine Abgasseite (9) und eine Verdampferseite (10) aufweist.

## Claims

1. An exhaust gas evaporator (3, 6) of a motor vehicle for evaporating a coolant by means of exhaust gas, having a heat exchanger block (20), wherein the heat exchanger block is formed in layers in a sandwich construction with laminated exhaust gas plates and laminated coolant plates, with a first axial terminating device (49) and a second axial terminating device (51), in which the heat exchanger block (20) has both axial inlet openings (46) and axial outlet openings (48), **characterised in that** means (55, 56, 57, 58) for forming a positive fit with the axial terminating devices (49, 51) are situated on the heat exchanger block (20), wherein the means (55, 56, 57, 58) for forming the positive fit project at least partially over the axial inlet openings (46) and/or over the axial outlet openings (48) of the heat exchanger block (20) in the axial direction, such that they may be situated radially next to contact shoulders of the axial terminating devices (49, 51) and the heat exchanger block (20) has axially acting fixing means (68, 69) that project radially over the heat exchanger block (20), in particular radially over the casing (70) of the heat exchanger block (20).

2. The exhaust gas evaporator (8) according to claim 1, **characterised in that** the means (55, 56, 57, 58) for forming the positive fit may be situated in axially open grooves (59, 60, 61, 62) of the axial terminating devices (49, 51).

3. The exhaust gas evaporator (8) according to claim 1 or 2, **characterised in that** the means (55, 56, 57, 58) for forming the positive fit are formed by radial outer components (26) of the heat exchanger block (20).

4. The exhaust gas evaporator (8) according to claim 3, **characterised in that** the radial outer components (26) of the heat exchanger block (20) form a casing of the heat exchanger block (20).

5. The exhaust gas evaporator (8) according to one of the preceding claims, **characterised in that** the means (55, 56, 57, 58) for forming the positive fit are formed by spacer bars (32, 33, 34, 35) and/or by laminated plates (27, 31) of the heat exchanger block (20).

6. The exhaust gas evaporator (8) according to claim 2, **characterised in that** the axially open grooves (59, 60, 61, 62) of the axial terminating devices (49, 51) have an outer groove shoulder (65) and/or an inner groove shoulder (66) on which the means (55, 56, 57, 58) for forming the positive fit may be supported in the radial direction.

7. The exhaust gas evaporator (8) according to one of the preceding claims, **characterised in that** a radial contact shoulder or an inner groove shoulder (66) of the axially open grooves (59, 60, 61, 62) forms an axial limit stop (67) for components (25) of the heat exchanger block (20), in particular for laminated plates (27, 31), spacer bars (32, 33, 34, 35) and/or connecting channels (39) of the heat exchanger block (20).

8. The exhaust gas evaporator (8) according to one of claims 1 to 7, **characterised in that** the axially acting fixing means (68, 69) are situated on the laminated plates (27, 31) and/or on the spacer bars (32, 33, 34, 35).

9. The exhaust gas evaporator (8) according to one of the preceding claims, **characterised in that** the axial terminating devices (49, 51) have radially open fixing grooves (71) for axially acting fixing means (68, 69) of the heat exchanger block (20).

10. The exhaust gas evaporator (8) according to claim 9, **characterised in that** the radially open fixing grooves (71) are situated upstream from the axially open grooves (59, 60, 61, 62) in the axial direction.

11. The exhaust gas evaporator (8) according to one of the preceding claims, **characterised in that** an axially open groove (59, 60, 61, 62) of the axial terminating devices (49, 51) and/or a radially open fixing groove (71) of the axial terminating devices (49, 51) have/has a solder depot (75).

12. The exhaust gas evaporator (8) according to one of the preceding claims, **characterised in that** the axial terminating devices (49, 51) have a connecting flange (50) for an exhaust gas system (5) of a motor vehicle.

13. The exhaust gas evaporator (8) according to one of the preceding claims, **characterised in that** the heat exchanger block (20) has an exhaust gas side (9) and an evaporator side (10).

## Revendications

1. Evaporateur de gaz d'échappement (3, 6) d'un véhicule automobile, servant à l'évaporation d'un moyen de refroidissement, par des gaz d'échappement, comprenant un bloc d'échangeur de chaleur (20), où le bloc d'échangeur de chaleur est formé, en couches, dans une structure sandwich, comprenant des tôles en couches de gaz d'échappement et des tôles en couches d'un moyen de refroidissement, comprenant un premier dispositif de fermeture axial (49) et un deuxième dispositif de fermeture axial (51), évaporateur de gaz d'échappement dans lequel le bloc d'échangeur de chaleur (20) présente aussi bien des ouvertures d'entrée axiales (46) que des ouvertures de sortie axiales (48), **caractérisé en ce que** des moyens (55, 56, 57, 58) servant à la formation d'une complémentarité de forme avec les dispositifs de fermeture axiaux (49, 51) sont disposés sur le bloc d'échangeur de chaleur (20), où les moyens (55, 56, 57, 58) servant à la formation de la complémentarité de forme sont au moins partiellement en saillie, axialement, au-dessus des ouvertures d'entrée axiales (46) et / ou au-dessus des ouvertures de sortie axiales (48) du bloc d'échangeur de chaleur (20), de manière telle que lesdits moyens puissent être disposés, dans le sens radial, à côté d'épaulements d'appui des dispositifs de fermeture axiaux (49, 51), et le bloc d'échangeur de chaleur (20) présente des moyens de blocage (68, 69) agissant axialement, lesdits moyens de blocage étant en saillie, radialement, au-dessus du bloc d'échangeur de chaleur (20), en particulier radialement au-dessus de l'enveloppe (70) du bloc d'échangeur de chaleur (20).

2. Evaporateur de gaz d'échappement (8) selon la revendication 1, **caractérisé en ce que** les moyens (55, 56, 57, 58) servant à la formation de la complémentarité de forme peuvent être disposés dans des rainures (59, 60, 61, 62) des dispositifs de fermeture axiaux (49, 51), lesdites rainures étant ouvertes axialement.

3. Evaporateur de gaz d'échappement (8) selon la revendication 1 ou 2, **caractérisé en ce que** les moyens (55, 56, 57, 58) servant à la formation de la complémentarité de forme sont formés par des composants extérieurs (26) - dans le sens radial - du bloc d'échangeur de chaleur (20).

4. Evaporateur de gaz d'échappement (8) selon la revendication 3, **caractérisé en ce que** les composants extérieurs (26) - dans le sens radial - du bloc d'échangeur de chaleur (20) forment une enveloppe du bloc d'échangeur de chaleur (20).

5. Evaporateur de gaz d'échappement (8) selon l'une quelconque des revendications précédentes, **caractérisé en ce que** les moyens (55, 56, 57, 58) servant à la formation de la complémentarité de forme sont formés par des baguettes d'espacement (32, 33, 34, 35) et / ou par des tôles en couches (27, 31) du bloc d'échangeur de chaleur (20).

6. Evaporateur de gaz d'échappement (8) selon la revendication 2, **caractérisé en ce que** les rainures (59, 60, 61, 62) des dispositifs de fermeture axiaux (49, 51), lesdites rainures étant ouvertes axialement, présentent un épaulement de rainure extérieur (65) et / ou un épaulement de rainure intérieur (66) sur lesquels peuvent s'appuyer, radialement, les moyens (55, 56, 57, 58) servant à la formation de la complémentarité de forme.

7. Evaporateur de gaz d'échappement (8) selon l'une quelconque des revendications précédentes, **caractérisé en ce qu'**un épaulement d'appui radial ou un épaulement de rainure intérieur (66) des rainures ouvertes axialement (59, 60, 61, 62) forme une butée axiale (67) pour des composants (25) du bloc d'échangeur de chaleur (20), en particulier pour des tôles en couches (27, 31), pour des baguettes d'espacement (32, 33, 34, 35) et / ou pour des conduits de liaison (39) du bloc d'échangeur de chaleur (20).

8. Evaporateur de gaz d'échappement (8) selon l'une quelconque des revendications 1 à 7, **caractérisé en ce que** les moyens de blocage (68, 69) agissant axialement sont disposés sur les tôles en couches (27, 31) et / ou sur les baguettes d'espacement (32, 33, 34, 35).

9. Evaporateur de gaz d'échappement (8) selon l'une quelconque des revendications précédentes, **caractérisé en ce que** les dispositifs de fermeture axiaux (49, 51) présentent des rainures de sécurité (71) ouvertes radialement pour des moyens de blocage (68, 69) du bloc d'échangeur de chaleur (20), lesdits moyens de blocage agissant axialement.

10. Evaporateur de gaz d'échappement (8) selon la revendication 9, **caractérisé en ce que** les rainures de sécurité (71) ouvertes radialement sont disposées, axialement, devant les rainures (59, 60, 61, 62) ouvertes axialement.

11. Evaporateur de gaz d'échappement (8) selon l'une quelconque des revendications précédentes, **caractérisé en ce qu'**une rainure (59, 60, 61, 62) - ouverte axialement - des dispositifs de fermeture axiaux (49, 51) et / ou une rainure de sécurité (71) - ouverte radialement - des dispositifs de fermeture axiaux (49, 51) présentent un dépôt de brasure (75).

12. Evaporateur de gaz d'échappement (8) selon l'une quelconque des revendications précédentes, **caractérisé en ce que** les dispositifs de fermeture axiaux (49, 51) présentent une bride de raccordement (50) pour un système de gaz d'échappement (5) d'un véhicule automobile.

13. Evaporateur de gaz d'échappement (8) selon l'une quelconque des revendications précédentes, **caractérisé en ce que** le bloc d'échangeur de chaleur (20) présente un côté gaz d'échappement (9) et un côté évaporateur (10).
